# EUROPEAN PATENT SPECIFICATION

(11) **EP 2 856 092 B1**
(45) Date of publication and mention of the grant of the patent: **28.08.2019**
(21) Application number: 13832605.3
(22) Date of filing: 29.05.2013
(51) Int. Cl.: G01J 1/02, G01J 1/42, G01J 1/04

(54) **LASER POWER SENSOR**
LASERLEISTUNGSSENSOR
CAPTEUR DE PUISSANCE LASER

(30) Priority: 30.05.2012 US 201261653108 P
(43) Date of publication of application: 08.04.2015
(73) Proprietor: IPG Photonics Corporation, Oxford, Massachusetts 01540 (US)
(72) Inventor: FOMIN, Valentin, Oxford, MA 01540 (US); ABRAMOV, Andrey, Oxford, MA 01540 (US); MASHKIN, Andrei, Oxford, MA 01540 (US)
(74) Representative: Kohlmann, Kai
(86) International application number: PCT/US2013/043007
(87) International publication number: WO 2014/035505

(56) References cited:
- WO-A2-2011/119721
- WO-A2-2011/119721
- US-A- 4 618 211
- US-A1- 2006 165 343
- US-A1- 2009 092 157
- US-A1- 2009 122 314
- US-A1- 2009 135 427
- US-A1- 2009 154 512
- US-A1- 2010 142 906
- US-B1- 6 865 320

## Description

### BACKGROUND OF THE INVENTION

### Field of the Invention

The invention relates to laser systems and, in particular, to a fiber laser system provided with a power sensor unit which is capable of detecting Rayleigh scattering of laser light, which propagates along an optical fiber, in amounts sufficient for reliable measuring of the laser output power.

### Description of the Related Art

The most fundamental method of checking the performance of a laser is to measure its power or energy output. Laser output directly affects a laser's ability to perform a process at hand. Measuring and monitoring this parameter are often very important from the time a laser is first manufactured, through system integration, and on to the final end customer who will be using the laser system in applications as far-ranging as medical, scientific, biomedical, industrial and military applications. Just as there are many different types of lasers with widely varying specifications, there are different measurement techniques that are appropriate for specific types of lasers and, in general, matched to particular laser specifications.

A measurement system typically includes a power sensor placed into the laser beam and providing a signal output proportional to the laser input. The second component is the meter. A typical power sensor, i.e., a device capable of detecting the optical power output of the power output of continuous wave (CW) lasers, or the average power of a pulsed or modulated lasers, has a configuration including beam splitters. The latter is configured to tap off a predetermined portion of light beam. The utilization of splitters thus introduces undesirable power losses of the transmitted light beam.

For high power lasers including fiber lasers, which are of a particular interest here, such losses may be unacceptable since they detrimentally affect the efficiency of the laser system. In addition, these power losses are necessary to utilize which leads to heat generation lowering the reliability of the laser system.

Referring specifically to fiber lasers, in addition to the losses disclosed above, there are intrinsic losses, i.e., light losses practically unavoidable in optical fibers. Intrinsic fiber losses are those associated with the fiber optic material itself and include absorption and scattering.Clearly it is preferential to use intrinsic losses rather than create unnecessary additional losses for the task at hand, i.e., detection of power of light propagating along a fiber.

Referring to linear scattering, as one of ordinary skill in the laser art knows, power losses due to this optical phenomenon are caused by imperfections in the core material and irregularities between the junction and cladding. The most pronounced type of linear scattering - Rayleigh scattering - can be caused by the existence of tiny dielectric inconsistencies in the glass. Because these perturbations are small with respect to the waves being propagated, light striking a Rayleigh imperfection scatters in all directions. The lack of concrete directionality of scattered light and therefore the difficulty to collect it render a detection process thereof rather difficult and unreliable. As a result, the use of known detectors operative to sense light, which while being guided along a fiber is scattered in accordance with a Rayleigh mechanism, is limited.

US 6 865 320 B1 discloses a matched pair of tilted gratings formed in a section of an optical fiber and used as a "tap" to measure the power of an optical signal passing through the fiber. By using a pair of highly-tilted gratings and orienting the gratings to be orthogonal with respect to one another a pair of orthogonally polarized beams will be out-coupled from the propagating signal. Since the pair of beams are orthogonal, their sum can be made insensitive to variations in polarization of the optical signal propagating along the fiber.

US 4 618 211 A discloses an optical fiber communication system wherein predisposed emission means cause enhanced emission, at intermediate points along the fiber, of radiation propagating longitudinally through the fiber. Emission means according to this invention are incorporated into the fiber during fiber manufacture.

US 2006/165343 A1 discloses an optical apparatus including an optical fiber having a wavelength of operation, the optical fiber comprising a first length of the optical fiber joined to a second length of the optical fiber with a splice such that the first and second lengths are in optical communication and a photodetector for sensing light leaking from the splice.

WO 2011/119721 A2 discloses a laser power sensor unit comprising a body configured with a through channel, namely an elliptic cavity extending in a longitudinal axis defined by a laser beam. The laser beam passes through ambient air along this axis within the cavity and Rayleigh scattered light from this beam impinges on a light detector.

A need therefore, exists for a power sensor unit capable of effectively detecting scattered light which is guided along an optical fiber.

A further need exists for a fiber laser system provided with a power sensor unit which is configured to reliably detect light scattered in accordance with a Rayleigh mechanism.

A power sensor unit according claim 1 and a fiber laser system according claim 9 fullfill these needs.

### ASPECTS AND SUMMARY OF THE INVENTION

Disclosed is an improved configuration of laser power sensor unit including a case with a recess which receives a stretch of fiber, a light reflector and photodiode; the reflector and photodiode are spaced from the fiber stretch in opposite directions. The inventive sensor unit is configured to provide a measurement data within about a ±3% range of real light power obtained by a calibrated certified sensor. Such a range is smaller than the industry accepted 5% range.

In one aspect, one of the surfaces defining the recess - reflector - is arched so as to reflect a large segment of Rayleigh radiation incident thereupon. The surface is structured to have a focal plane formed behind the fiber. Configuring the inventive unit so that a light input window of photodiode lies in the focal plane allows collecting a sufficient amount of scattered light overcoming thus a major difficulty of the known prior art - collecting a sufficient amount of Rayleigh scattered light.

In another aspect of the invention, the reflective surface is matte. The latter effectively reduces the undesirable effects of manufacturing defects and loose tolerances typically occurred during a fabrication process. In still another aspect, the case including the reflective matte surface is gilded which provides the surface with high reflectivity and long term stability of coefficient of refraction.

In yet another aspect of the invention, the recess and light input window of the detector are hermetically sealed by a cover means preventing the air from accessing the recess. The airtightness provides additional stability of various parameters of the sensor unit, increased resistivity to environmental factors such as a background exposure and increased humidity which leads to a formation of mist on the mirror.

The above and other aspects, features and advantages of the present invention will become apparent from the following description read in conjunction with the accompanying drawings, in which like reference numerals designate the same elements.

### BRIEF DESCRIPTION OF THE DRAWINGS

FIG. 1A is an orthogonal view of the inventive laser power sensor unit;
FIG. 1B is an orthogonal exploded view of the sensor unit of FIG. 1A;
FIG. 1C is an orthogonal view of the sensor unit in the assembled state thereof;
FIG. 1D is a cross-sectional view of the sensor unit 1 taken along lines D-D of FIG. 1A;
FIG. 1E is a cross-sectional view of the sensor unit taken along lines E-E of FIG.1C; and
FIG. 2 is a diagrammatic view of fiber laser system provided with the sensor unit of FIGs. 1A-1E.
FIG.3A is a graph illustrating the deviation of the data obtained by disclosed sensor unit and the data measured by a certified power meter for a 120W power light propagating along a fiber during a controlled period of time.
FIG. 3B is a graph illustrating temperature changes during the controlled period of time.
FIG. 4A is a graph similar to that of FIG. 3A but for 60 W power light.
FIG. 4B is a graph illustrating temperature changes during the controlled period of time.

### DETAILED DESCRIPTION OF THE PREFERRED EMBODIMENT

Reference will now be made in detail to the preferred embodiment of the invention which discloses a structure configured to provide focusing of Rayleigh light scattering in the amount sufficient for repeatable and reliable detection. Wherever possible, same or similar reference numerals are used in the drawings and the description to refer to the same or like parts or steps. The drawings are in simplified form and are not to precise scale. For purposes of convenience and clarity only, directional (up/down, etc.) or motional (forward/back, etc.) terms may be used with respect to the drawings. These and similar directional terms should not be construed to limit the scope of the invention in any manner.

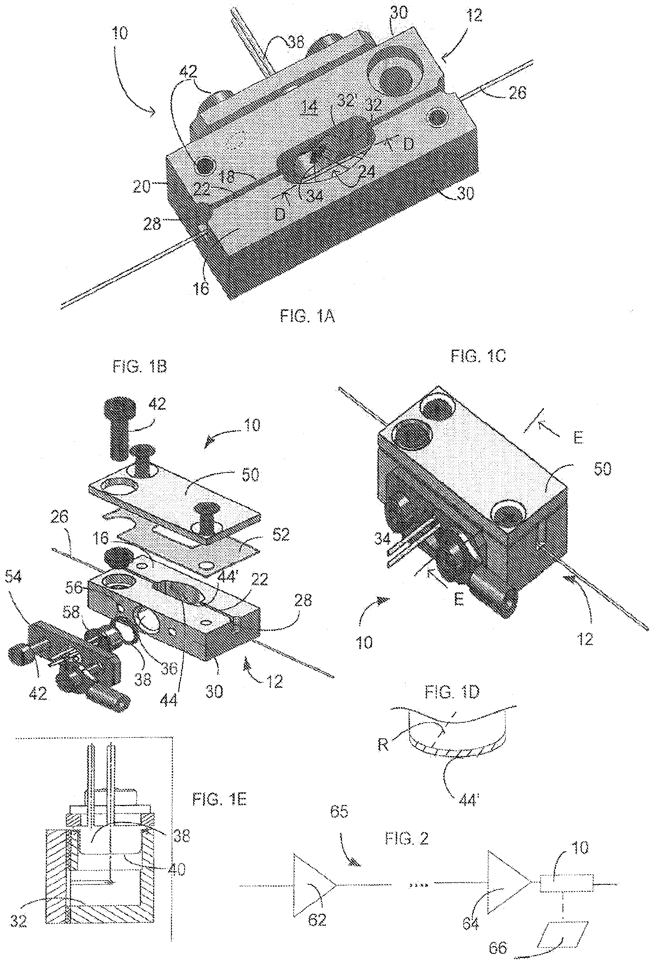

In reference to Figures 1A-1E, a laser light power sensor unit 10 includes a case 12 that may have a variety of configurations, but as illustrated, has a substantially rectangular body 14. One of opposite large-area faces 16 of body 14 has a groove or channel 18 extending between opposite short side faces 20 of body 14. The cross-section of channel 18 depends on a fiber type and more particularly on the fiber's outer diameter and its distance relative to a photosensitive area 40 (FIG. IE) of a diode 38 and reflective surface. Moreover, channel 18 is not uniformly configured and has relatively narrow and substantially uniformly dimensioned regions 22 extending from respective short-side faces 20 and running into a relatively-large region or recess 24, which thus interrupts channel 18 defining two spaced narrow regions 22. The narrow regions 22 are generally configured to receive a fiber 26 so as to prevent excessive motion of the fiber relative to body 14. Again, only as an example, the depth of groove 18 is about half the thickness of body 14, i.e., about 1/6". Outer ends 28 of groove 18 terminating in respective short-side faces 20 are generally U-shaped so as to prevent unnecessary friction between the fiber and body 14.

While the geometry of entire unit 10 may be modified, case 12 as shown is about a 1" long, about 1/3" thick and about ½" wide. The channel 18 is sufficiently deep to reliably secure a stretch of fiber 26. Ultimately, the desired position of the fiber should be such that the measurement data does not deviate from a reference value - the power of a tapped portion of light measured by a certified sensor - for more than about 3% which, in turn, lower than 5% that are typically considered the industry standard.

The recess 24 may be positioned at any convenient location on body 12, but preferably occupies a central location on recessed large-area face 16. A side 32 of recess 24 has a U-shaped cross-section. A surface 32' of side 32 is preferably, but not necessarily, flat. A passage 36 (FIG. 1B) is bored through body 14 and extends between long side face 30 and side 32 of recess 24. The geometry of passage 36 is configured so as to allow a PIN photodiode 38 to extend through the passage from long side face 30 of body 14 to the desired position in which its light input window 40 (FIG.1E) stops at a distance from side 32 of recess 24.

The opposite side 44 of recess 24 (FIGS. 1A, 1B and 1D) also has a U-shaped cross-section, but contrary to surface 32' of side 32, its surface 44' is curved or arched outwards from side 32. The curved surface 44' is configured with a radius R (FIG. 1D) selected so that scattered light, incident on this surface from fiber 26, is invariably focused in a focal plane of surface 32' which includes light input window 40 (FIG.1E) as shown by arrows in FIG. 1A. The radius R is further so selected that the scattered light is reflected in a sufficient amount for reliable detection and further measurement. The reflective surface 44', as part of body 14, is preferably gilded and processed to be matte which provides additional stability and long-term detectivity of sensor unit 10. As known in the art, gold is highly resistant to ambient stresses and has a long term stable coefficient of reflection. Alternatively, instead of gold, stainless steel, nickel, aluminum and other stable metals, ceramics and plastics can be used individually or in any combination with one another for manufacturing case 12. The critical condition is the ability of material to be bonded with gold so as to withstand environmental stresses and exhibit a stable and high coefficient of reflection over a long term. Alternatively to gold, stainless steel and/or nickel can be used as well. A preferred composition of materials used for manufacturing case 12 includes aluminum covered with a layer of nickel with a layer of gold coated upon the nickel layer.

To assemble unit 10, a sealing ring 56 (FIG. 1B) is placed on the outer opening of passage 36 so that, as detector 38 is inserted into the passage, ring 56 is sandwiched between a rim 58 of detector 38 and long side face 30 of case 12. A fixing plate 54 is mounted on top of side 30 of case 12 so that its opening 34 (FIG. C) is placed coaxially with passage 36 to be traversed by pins of sensor 38. Upon establishing the desired position, fasteners 42 reliably couple plate 54 and detector 38 to case 12.

A lid 50 covers case 12 so that the recess receiving fiber 26 is airtight. This can be ensured by placing a sealing plate 52 between case 12 and lid 50. Thus, assembled sensor unit 10 is characterized by hermetic structure preventing air communication between an ambient atmosphere and the inside of unit 10 so that groove 18 with fiber 26 and light input window 40 of photodiode 38 are hermetically sealed which improves background exposure and increases resistance to humidity variation causing the formation of mist on the matte surface of reflective surface 44'.

FIG. 2 illustrates a diagrammatic view of a fiber laser system 65 including one or more amplifying cascades 62, 64. The system 65 may operate in a CW or pulsed regime. The disclosed sensor unit 10, as shown, is located downstream from booster 64. However, the unit 10 may be placed at any location of interest along a light path. A meter 66, typically including a controller, is coupled to the output of the unit 10 and configured to measure the detected signal.

The performance of optical detectors is commonly characterized by a number of different parameters. Typically, the larger photosensitive area, the better sensitivity of the photodetector. Returning to power sensors used in the art of fiber lasers, a 5% margin of error, i.e. deviation of the detected power of light propagating along a fiber from a real figure of power is an accepted value.

The table A illustrates data obtained during multiple experiments of the disclosed meter with one of numerous off-the-shelf photodiodes, such as Hamamatse G8370.

| FIBER TYPE | AF 100 | AF2 50 micron | PF1 25 micron | PF2 25 micron | AF 200 micron |
|---|---|---|---|---|---|
| FIBER CORE | MM | MM | SM | SM | MM |
| POWER, W | 4400 | 2500 | 120 | 60 | 15000 |
| PHOTODIODE SENSITIVITY nA/W | 15.26 | 16.97 | 17.04 | 17.10 | 10.14 |

Five fibers have been selected including three active fibers ("AF") with respective core diameters of 100, 50 and 200 micron all of which support propagation of multiple modes ("MM"). Two passive fibers ("PF") with a 25 core diameter each are configured to support a single mode ("SM") light. The power of light propagating along the fibers varies from 4.4 kW for AF100, 2.5 kW for AF 50, 120 W and 60 for PF 25, and 15 kW for AF 200. All of the fibers except for the AF 200 are configured with a uniform outer diameter and are spaced at a uniform distance from the photosensitive area. The outer diameter of AF 200 is substantially larger than that of other fibers bringing the fiber closer to the photosensitive area.

Using the disclosed sensor shown in FIGs. 1 and 2 and operative to collect scattering light, it can be seen the sensitivity of photodiode is substantially uniform for both active and passive fibers regardless of the modality of the propagated light and the power thereof.

Turning now to table A, it can be seen that the deviation of data obtained during the use of the disclosed structure from the data obtained from a calibrated certified power meter does not exceed 3% regardless of light power. The numerous tests, only a small portion of which is shown here, were conducted using a wide range of powers and as shown here as an example, the table indicates data obtained for 120 W light power using.

**Table A**

| Temperature C | Powermeter, W | Time, sec | Measured power W | Calculated deviation, % | Standard deviation % |
|---|---|---|---|---|---|
| 27.5 | 120.471 | 10 | 96 | 0.08 | 5 |
| 28.4 | 120.554 | 50 | 96.1 | 0.01 | 5 |
| 28.8 | 120.704 | 100 | 96 | 0.23 | 5 |
| 29 | 120.454 | 150 | 95.8 | 0.24 | 5 |
| 29.1 | 120,904 | 200 | 96 | 0.38 | 5 |
| 29.2 | 120.887 | 300 | 96 | 0.39 | 5 |
| 29.2 | 120.871 | 400 | 96 | 0.38 | 5 |
| 29.2 | 120.871 | 450 | 95.9 | 0.49 | 5 |
| 29.2 | 120.871 | 479 | 95.9 | 0.49 | 5 |

As can be seen from the table, for a 479 second period with the above-indicated Hamamatse G8370 photodiode, the measured data does not deviate from the data, obtained by a certified meter, for more than 0.49% which is exceptionally good if compared with 5% standard deviation.

As mentioned, the disclosed sensor unit was tested using a wide range of laser outputpowers. The following table B indicates test results for a 60 W output power.

**Table B**

| Temperature C | Powermeter, W | Time, sec | Measured power W | Calculated deviation, % | Standard deviation % |
|---|---|---|---|---|---|
| 22 | 60.302 | 10 | 47.9 | 0.37 | 5 |
| 23.3 | 60.302 | 50 | 47.8 | 0.44 | 5 |
| 24.1 | 60.385 | 100 | 47.8 | 0.58 | 5 |
| 24.5 | 60.302 | 150 | 47.8 | 0.44 | 5 |
| 24.8 | 60.202 | 200 | 47.6 | 0.70 | 5 |
| 25 | 60.285 | 300 | 47.7 | 0.62 | 5 |
| 25.1 | 60.302 | 400 | 47.7 | 0.62 | 5 |
| 25.1 | 60.285 | 450 | 47.6 | 0.83 | 5 |
| 25.1 | 60.269 | 500 | 47.6 | 0.81 | 5 |

Table B, like table A, clearly indicates the reliability and stability of the measurement process utilizing the disclosed structure producing measurements that deviates from the real data at less than 1%.

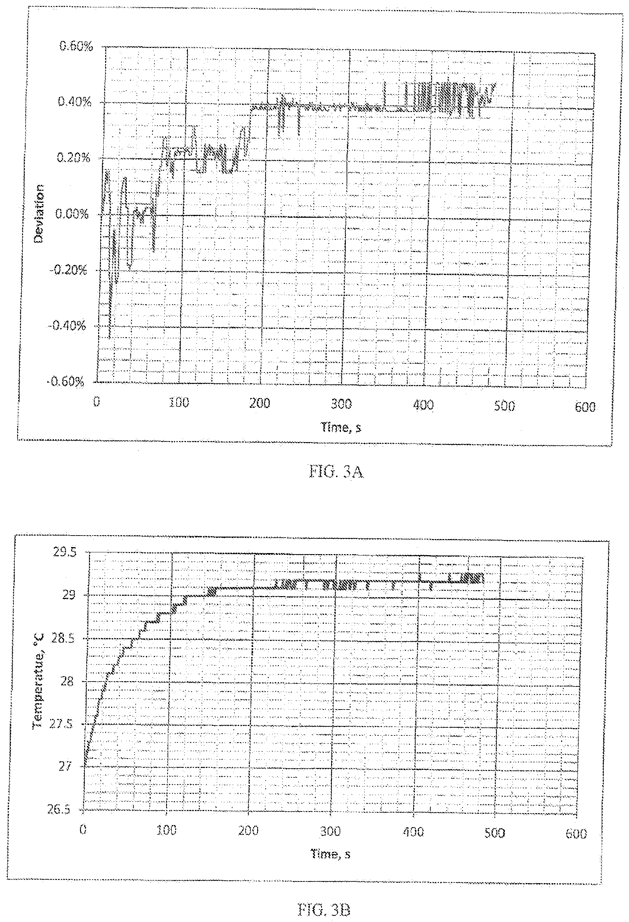

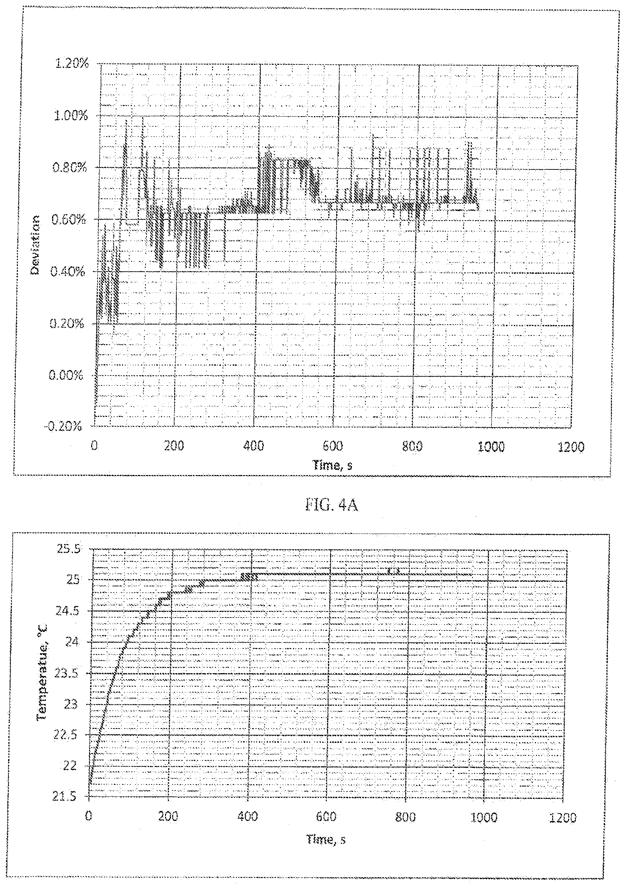

FIGs. 3A, 3B, 4A and 4B illustrate the results including, among others, those shown in Tables A and B. It is understood that the sensitivity of the used and known photodiode is high. However, even with less sophisticated photodiodes, the disclosed structure provides excellent results with the above-discussed deviation not exceeding 3%.

## Claims

1. A laser power sensor unit (10) for detecting Rayleigh scattering of laser light guided along a fiber (26), comprising:
- a body (14) configured with:
- a through-channel (18) extending along a longitudinal axis,
- a U-shaped recess (24) centered along a recess axis, which extends transversely to the longitudinal axis, and interrupting the channel (18), and
- a passage (36) coaxial with and opening into the U-shaped recess (24) opposite to a recess bottom (44');
- a light detector (38) provided with a light input window (40) terminating in the passage (36),
- the recess bottom (44') being curved to reflect an amount of the Rayleigh scattering on a focal point located on the light input window (40),
- wherein the U-shaped recess (24) and the light input window (40) of the detector (38) are hermetically sealed by a cover means (50) preventing air from accessing the recess (24),
- wherein the amount of the focused Rayleigh scattering is sufficient to provide a measurement data which deviates from a reference value of a real light power of the laser light obtained by a calibrated certified sensor at no more than about ±3%.

2. The laser power sensor unit of claim 1, wherein the body is made from material selected from the group consisting of metals, ceramics and plastics and a combination thereof, the curved bottom being matte.

3. The laser power sensor unit of claim 2, wherein the body is made from a metal composition including an aluminum base, a layer of nickel covering the aluminum base and a layer of gold coated upon the nickel layer.

4. The laser power sensor unit of claim 1, wherein the light detector is removably mounted in the passage.

5. The laser power sensor unit of claim 1 further comprising a fixing plate removably coupled to the body and having an opening which is coaxial with the passage and traversed by the light detector.

6. The laser power sensor unit of claim 5 further comprising an o-ring located between the body and fixing plate, and a plurality of fasteners removably attaching the fixing plate and body to one another.

7. The laser power sensor unit of claim 6 further comprising a cover detachably mounted to the body, wherein the cover and fixing plate are configured so that upon coupling the body to the cover and fixing plate, the curved bottom being hermetically sealed so as to prevent air-communication between an interior of the U-shaped recess and an ambient atmosphere.

8. The laser power sensor unit of claim 7 further comprising a sealing plate sandwiched between opposing surfaces of respective plate and case.

9. A fiber laser system (65), comprising:
- at least one gain block (62) configured to amplify laser light propagating along a fiber;
- a fiber coupled to an output of the one gain block (62) and guiding the amplified light further along the light path; and
- one laser power sensor unit (10) of claim 1 located along the light path downstream from the one gain block (62).

10. The fiber laser system of claim 9, wherein the fiber is selected from the group consisting of single mode, multimode active and passive fibers and a combination thereof,

11. The fiber laser system of claim 9, wherein the sensor assembly further has a light meter operatively coupled to the light detector and configured to receive said focused part of said scattered laser light so as to determine said light power of said amplified laser light.

12. The fiber laser system of claim 9, wherein the light detector includes a photodiode.

## Patentansprüche

1. Laserleistungssensoreinheit (10) zum Detektieren einer Rayleigh-Streuung von Laserlicht, das entlang einer Faser (26) geleitet wird, umfassend:
- einen Körper (14), der konfiguriert ist mit:
- einem Durchgangskanal (18), der sich entlang einer Längsachse erstreckt,
- einer U-förmigen Vertiefung (24), die entlang einer Vertiefungsachse zentriert ist, die sich quer zur Längsachse erstreckt, und den Kanal (18) unterbricht, und
- einen Durchgang (36), der koaxial zu der U-förmigen Vertiefung (24) liegt und in diese gegenüber einem Vertiefungsboden (44') mündet;
- einen Lichtdetektor (38), der mit einem Lichteingangsfenster (40) bereitgestellt ist, das im Durchgang (36) endet,
- wobei der Vertiefungsboden (44') gekrümmt ist, um eine Menge der Rayleigh-Streuung an einem Brennpunkt zu reflektieren, der sich am Lichteingangsfenster (40) befindet,
- wobei die U-förmige Vertiefung (24) und das Lichteingangsfenster (40) des Detektors (38) hermetisch durch ein Abdeckmittel (50) verschlossen sind, das ein Eindringen von Luft in die Vertiefung (24) verhindert,
- wobei die Menge der fokussierten Rayleigh-Streuung ausreichend ist, um Messdaten bereitzustellen, die von einem Referenzwert einer realen Lichtleistung des Laserlichts, die durch einen kalibrierten zertifizierten Sensor erhalten wird, um nicht mehr als etwa ±3% abweichen.

2. Laserleistungssensoreinheit nach Anspruch 1, wobei der Körper aus Material besteht, das ausgewählt ist aus der Gruppe bestehend aus Metallen, Keramiken und Kunststoffen und einer Kombination davon, wobei der gekrümmte Boden matt ist.

3. Laserleistungssensoreinheit nach Anspruch 2, wobei der Körper aus einer Metallzusammensetzung besteht, die eine Aluminiumbasis, eine Schicht aus Nickel, die die Aluminiumbasis bedeckt, und eine Schicht aus Gold, die auf die Nickelschicht aufgetragen ist, enthält.

4. Laserleistungssensoreinheit nach Anspruch 1, wobei der Lichtdetektor entfernbar im Durchgang montiert ist.

5. Laserleistungssensoreinheit nach Anspruch 1, ferner umfassend eine Fixierungsplatte, die entfernbar an den Körper gekoppelt ist und eine Öffnung hat, die mit dem Durchgang koaxial ist und vom Lichtdetektor durchquert wird.

6. Laserleistungssensoreinheit nach Anspruch 5, ferner umfassend einen O-Ring, der zwischen dem Körper und der Fixierungsplatte liegt, und eine Vielzahl von Befestigungsmitteln, die entfernbar die Fixierungsplatte und den Körper aneinander befestigen.

7. Laserleistungssensoreinheit nach Anspruch 6, ferner umfassend eine Abdeckung, die lösbar am Körper montiert ist, wobei die Abdeckung und Fixierungsplatte so konfiguriert sind, das nach Kopplung des Körpers an die Abdeckung und Fixierungsplatte der gekrümmte Boden hermetisch verschlossen ist, um so eine Luftverbindung zwischen einem Innenraum der U-förmigen Vertiefung und einer Umgebungsatmosphäre zu verhindern.

8. Laserleistungssensoreinheit nach Anspruch 7, ferner umfassend eine Abdichtungsplatte, die zwischen gegenüberliegenden Oberflächen einer Platte beziehungsweise eines Gehäuses liegt.

9. Faserlasersystem (65), umfassend:
- mindestens einen Verstärkungsblock (62), der konfiguriert ist, Laserlicht, das sich entlang einer Faser ausbreitet, zu verstärken;
- eine Faser, die an einen Ausgang des einen Verstärkungsblocks (62) gekoppelt ist und das verstärkte Licht entlang des Strahlengangs weiterleitet; und
- eine Laserleistungssensoreinheit (10) nach Anspruch 1, die entlang des Strahlengangs stromabwärts des einen Verstärkungsblocks (62) liegt.

10. Faserlasersystem nach Anspruch 9, wobei die Faser ausgewählt ist aus der Gruppe bestehend aus aktiven und passiven Einzelmodus-, Mehrfachmodus-Fasern und einer Kombination davon.

11. Faserlasersystem nach Anspruch 9, wobei die Sensoranordnung ferner einen Lichtmesser hat, der betriebsbereit an den Lichtdetektor gekoppelt und konfiguriert ist, den fokussierten Teil des gestreuten Laserlichts zu empfangen, um so die Lichtleistung des verstärkten Laserlichts zu bestimmen.

12. Faserlasersystem nach Anspruch 9, wobei der Lichtdetektor eine Fotodiode enthält.

## Revendications

1. Unité de capteur de puissance laser (10) pour détecter une diffusion Rayleigh de lumière laser guidée le long d'une fibre (26), comprenant :
- un corps (14) configuré avec :
- un canal traversant (18) s'étendant le long d'un axe longitudinal,
- une cavité en forme de U (24) centrée le long d'un axe de cavité, lequel s'étend transversalement à l'axe longitudinal, et interrompant le canal (18), et
- un passage (36) coaxial avec la cavité en forme de U (24), et débouchant dans celle-ci, opposé à un fond de cavité (44') ;
- un capteur de lumière (38) doté d'une fenêtre d'entrée de lumière (40) se terminant dans le passage (36),
- le fond de cavité (44') étant incurvé pour réfléchir une quantité de la diffusion Rayleigh sur un point focal situé sur la fenêtre d'entrée de lumière (40),
- dans laquelle la cavité en forme de U (24) et la fenêtre d'entrée de lumière (40) du capteur (38) sont scellées hermétiquement par un moyen de couvercle (50) empêchant l'air d'accéder à la cavité (24),
- dans laquelle la quantité de la diffusion Rayleigh focalisée est suffisante pour fournir une donnée de mesure qui diverge d'une valeur de référence d'une puissance de lumière réelle de la lumière laser obtenue par un capteur certifié étalonné à pas plus de près de ± 3%.

2. Unité de capteur de puissance laser selon la revendication 1, dans lequel le corps est constitué d'un matériau sélectionné dans le groupe formé par des métaux, des céramiques et plastiques, et une combinaison de ceux-ci, le fond incurvé étant mat.

3. Unité de capteur de puissance laser selon la revendication 2, dans lequel le corps est constitué d'une composition métallique comprenant une base d'aluminium, une couche de nickel recouvrant la base d'aluminium, et une couche d'or revêtue sur la couche de nickel.

4. Unité de capteur de puissance laser selon la revendication 1, dans laquelle le capteur de lumière est monté de façon amovible dans le passage.

5. Unité de capteur de puissance laser selon la revendication 1, comprenant en outre une plaque de fixation couplée de façon amovible au corps et ayant une ouverture qui est coaxiale avec le passage et traversée par le capteur de lumière.

6. Unité de capteur de puissance laser selon la revendication 5, comprenant en outre un joint torique situé entre le corps et la plaque de fixation, et une pluralité de fixations fixant de manière amovible la plaque de fixation et le corps l'un à l'autre.

7. Unité de capteur de puissance laser selon la revendication 6, comprenant un couvercle monté de façon amovible sur le corps, dans lequel le couvercle et la plaque de fixation sont configurés de manière à ce que, lors de l'accouplement du corps avec le couvercle et la plaque de fixation, le fond incurvé est scellé hermétiquement de manière à empêcher une communication d'air entre un intérieur de la cavité en forme de U et une atmosphère ambiante.

8. Unité de capteur de puissance laser selon la revendication 7, comprenant en outre une plaque de scellement prise en sandwich entre des surfaces opposées respectivement de la plaque et d'un boîtier.

9. Système laser à fibre (65), comprenant :
- au moins un bloc de gain (62) configuré pour amplifier une lumière laser se propageant le long d'une fibre ;
- une fibre couplée à une sortie de ce bloc de gain (62) et guidant la lumière amplifiée plus loin le long du trajet lumineux ; et
- une unité de capteur de puissance laser (10) selon la revendication 1 située le long du trajet lumineux en aval de ce bloc de gain (62).

10. Système laser à fibre selon la revendication 9, dans lequel la fibre est sélectionnée dans le groupe formé par des fibres actives et passives monomodes, multimodes, et une combinaison de celles-ci.

11. Système laser à fibre selon la revendication 9, dans lequel l'ensemble de détection possède en outre un photomètre couplé de manière fonctionnelle au capteur de lumière et configuré pour recevoir ladite partie focalisée de ladite lumière laser diffusée de manière à déterminer ladite puissance lumineuse de ladite lumière laser amplifiée.

12. Système laser à fibre selon la revendication 9, dans lequel le capteur de lumière comprend une photodiode.
